Europäisches Patentamt

European Patent Office

Office européen des brevets

(11) Veröffentlichungsnummer: **0 280 096 B1**

(12) **EUROPÄISCHE PATENTSCHRIFT**

(45) Veröffentlichungstag der Patentschrift: **14.11.90**

(51) Int. Cl.⁵: **F16M 11/04**

(21) Anmeldenummer: **88101708.1**

(22) Anmeldetag: **05.02.88**

(54) **Trägeranordnung für ein Sichtgerät.**

(30) Priorität: **09.02.87 DE 3703941**

(43) Veröffentlichungstag der Anmeldung:
**31.08.88 Patentblatt 88/35**

(45) Bekanntmachung des Hinweises auf die Patenterteilung:
**14.11.90 Patentblatt 90/46**

(84) Benannte Vertragsstaaten:
**DE FR GB IT SE**

(56) Entgegenhaltungen:
**DE-C- 3 214 443**
**DE-U- 8 508 455**
**FR-A- 2 006 506**
**FR-A- 2 088 721**
**US-A- 1 386 151**
**US-A- 3 358 957**
**US-A- 4 562 987**

(73) Patentinhaber: **TANDBERG DATA A/S,**
**Kjelsasveien 161 Postboks 9 Korsvoll,**
**N-0808 Oslo 8(NO)**

(72) Erfinder: **Helgeland, Olav, Huseby 8,**
**N-01482 Nittedal(NO)**

(74) Vertreter: **Fuchs, Franz-Josef, Dr.-Ing. et al,**
**Postfach 22 13 17, D-8000 München 22(DE)**

## Beschreibung

Die Erfindung bezieht sich auf eine Trägeranordnung für ein Sichtgerät gemäß dem Oberbegriff des Patentanspruchs 1.

Eine derartige Trägeranordnung ist bereits aus der US-A 3 358 957 bekannt. Diese bekannte Trägeranordnung enthält einen vertikalen Stützarm, der in einer Halterung einstellbar gelagert ist und einen an diesem Stützarm angeordneten horizontalen Tragarm. Ein das Sichtgerät tragender Gleitkörper ist in Längsrichtung des Tragarms verschiebbar angeordnet. An dem Gleitkörper ist ein Trägerteil befestigt, an dem ein als Fernsehgerät ausgebildetes Sichtgerät neigbar befestigt ist. Der vertikale Stützarm ist in der Halterung verrastbar und kann in verschiedene Höhen eingestellt werden, jedoch sind nur bestimmte Positionen einstellbar, da der Stützarm Löcher aufweist, in die ein Stift der Halterung eingreift. Weiterhin weist der Tragarm bei dieser bekannten Trägeranordnung keine besonders hohe Stabilität gegenüber seitlichen Kippmomenten des Sichtgerätes auf.

Der Erfindung liegt daher die Aufgabe zugrunde, eine Trägeranordnung für ein Sichtgerät anzugeben, die eine große Stabilität aufweist und bei der das Sichtgerät stufenlos in eine Vielzahl von Stellungen gebracht werden kann.

Erfindungsgemäß wird die Aufgabe bei der Trägeranordnung der eingangs genannten Art durch die im kennzeichnenden Teil des Patentanspruchs 1 angegebenen Merkmale gelöst.

Die Trägeranordnung gemäß der Erfindung zeichnet sich dadurch aus, daß sie nur sehr wenige Teile enthält und dennoch eine hohe Stabilität aufweist. Infolge der wenigen Teile kann die Trägeranordnung kostengünstig hergestellt werden und darüber hinaus ist sie optisch sehr ansprechend ausgebildet.

Eine besonders einfache Herstellung des Tragarms wird dadurch erreicht, daß die zwei Teilarme in der Nähe der Verbindungsstelle mit dem vertikalen Stützarm zu einem Arm zusammengefaßt sind. In diesem Fall kann die Herstellung dadurch erfolgen, daß ein aus einem Rohr gebildeter Tragarm nach einer Krümmung um 90° in Längsrichtung geteilt wird und die Teilarme derart geformt werden, daß sie in einem weiten Bereich parallel zueinander verlaufen. Die Teilarme können zur Erhöhung der Stabilität auf ihrer Unterseite teilweise insbesondere durch eine Platte miteinander verbunden werden.

Die Teilarme weisen bei einer zweckmäßigen Ausführungsform an den einander zugewandten Innenseiten Führungsnuten auf, in denen entsprechende Führungen an beiden Seiten des das Sichtgerät aufnehmenden Gleitkörpers gleiten.

Das Sichtgerät wird an dem Gleitkörper dadurch aufgenommen, daß dort ein Trägerteil drehbar angeordnet ist, auf dem das Sichtgerät neigbar befestigt ist. Damit kann das Sichtgerät in eine optimale Arbeitsstellung gebracht werden, da einerseits der Stützarm und der mit ihm verbundene Tragarm drehbar und in vertikaler Richtung stufenlos verstellbar sind, da der Gleitkörper in Längsrichtung des Tragarms stufenlos verschiebbar ist, da das Sichtgerät durch das Trägerteil auf dem Gleitkörper drehbar befestigt ist und da das Sichtgerät auf dem Trägerteil neigbar befestigt ist.

Zur Verschiebung des Sichtgeräts in Längsrichtung des Tragarms ist es günstig, wenn ein Handgriff vorgesehen ist, mittels dem der Gleitkörper in Längsrichtung des Tragarms verschiebbar ist. Der Handgriff kann auch derart ausgebildet sein, daß er eine dem Sichtgerät zugeordnete Tastatur aufnimmt. Insbesondere kann der Handgriff an seiner Oberseite Noppen aufweisen, die es ermöglichen, die Tastatur in einer Ruhestellung festzuklemmen und in einer Bereitschaftsstellung leicht geneigt einzuklemmen, so daß die Bedienungselemente der Tastatur weiterhin zugänglich sind. Damit steht eine Arbeitsfläche, an der die Halterung der Trägeranordnung befestigt ist, voll für andere Tätigkeiten zur Verfügung, wenn das Sichtgerät und die Tastatur nicht benutzt werden.

In dem Gleitkörper werden Kabel des Sichtgeräts geführt und diese Kabel sind durch eine lösbar angeordnete Kabelabdeckung im Gleitkörper abgedeckt. Die Unterseite des Gleitkörpers kann derart ausgebildet sein, daß sie zusammen mit einer Erhebung an der Platte an der Unterseite der Teilarme Anschläge nach einer Verschiebung zu und von einem Betrachter bildet.

Die Halterung enthält zweckmäßigerweise einen rohrförmigen Hohlkörper, in dem der vertikale Stützarm drehbar und in Längsrichtung verschiebbar gelagert ist und sich am unteren Ende des Hohlkörpers durch die Druckfeder abstützt. Das Abstützen erfolgt zweckmäßigerweise durch einen Schraubeinsatz, der in den Hohlkörper hineingeschraubt werden kann und mittels dem die Federkraft derart einstellbar ist, daß das Gewicht des Sichtgeräts mindestens teilweise kompensiert wird. Um zu verhindern, daß sich der Schraubeneinsatz bei einer Drehung des Tragarms um die Achse des Stützarms selbsttätig herausdreht, ist es vorteilhaft, wenn der Schraubeneinsatz ein mit Raststellen versehenes Gewinde aufweist und der Hohlkörper an seiner Innenseite mindestens eine den Raststellen zugeordnete Rastnase aufweist. Bei einem Herausdrehen des Schraubeinsatzes aus dem Hohlkörper muß dann jeweils die Steigung der entsprechenden Raststelle überwunden werden, die größer ist als die Steigung des Gewindes.

Der Schraubeinsatz könnte als unterer Anschlag für den vorteilhafterweise sich stufenweise nach unten verjüngenden Stützarm dienen, jedoch erweist es sich auch als zweckmäßig, den Schraubeinsatz mit einer Öffnung für den Stützarm auszubilden. Um eine leichte Höhenverstellbarkeit und eine erschwerte Drehung des Tragarms um die Achse des Stützarms zu erreichen, ist es günstig, wenn der Zwischenraum zwischen dem Stützarm und dem Hohlkörper der Halterung durch ein Kunststoffteil oberhalb der Druckfeder ausgefüllt ist. In dem Stützarm ist in Längsrichtung eine Nut vorgesehen, in die eine Nase des Kunststoffteils eingreift, so daß bei einer Drehung des Tragarms das Kunststoffteil mitgedreht werden muß und die Drehbewegung erschwert, während bei einer Vertikalbewegung des Stützarms lediglich der Stützarm in dem Kunststoffteil verschoben werden muß.

Der Hohlkörper 9 kann mittels einer einteiligen oder zweiteiligen Schraubklemme an einem Arbeitstisch befestigt sein. Es ist auch möglich, ihn in einem Loch im Arbeitstisch oder an einer senkrechten Wand zu befestigen.

Ein Ausführungsbeispiel der Trägeranordnung gemäß der Erfindung wird im folgenden anhand von Zeichnungen näher erläutert. Es zeigen

FIG 1 eine Darstellung der gesamten Trägeranordnung mit einem Sichtgerät,

FIG 2 eine Seitenansicht eines Tragarms und eines Stützarms,

FIG 3 eine Draufsicht auf den Tragarm,

FIG 4 ein Schnittbild des Tragarms,

FIG 5 eine teilweise Schnittansicht eines mit einem Trägerteil versehenen Gleitkörpers,

FIG 6 eine Draufsicht auf den Gleitkörper,

FIG 7 ein teilweise gebrochenes Schnittbild eines Hohlkörpers einer Halterung,

FIG 8 ein Schnittbild des Hohlkörpers und des Stützarms,

FIG 9 einen Schraubeinsatz und

FIG 10 und FIG 11 Seitenansichten des Sichtgerätes mit einem eine Tastatur aufnehmenden Haltegriff.

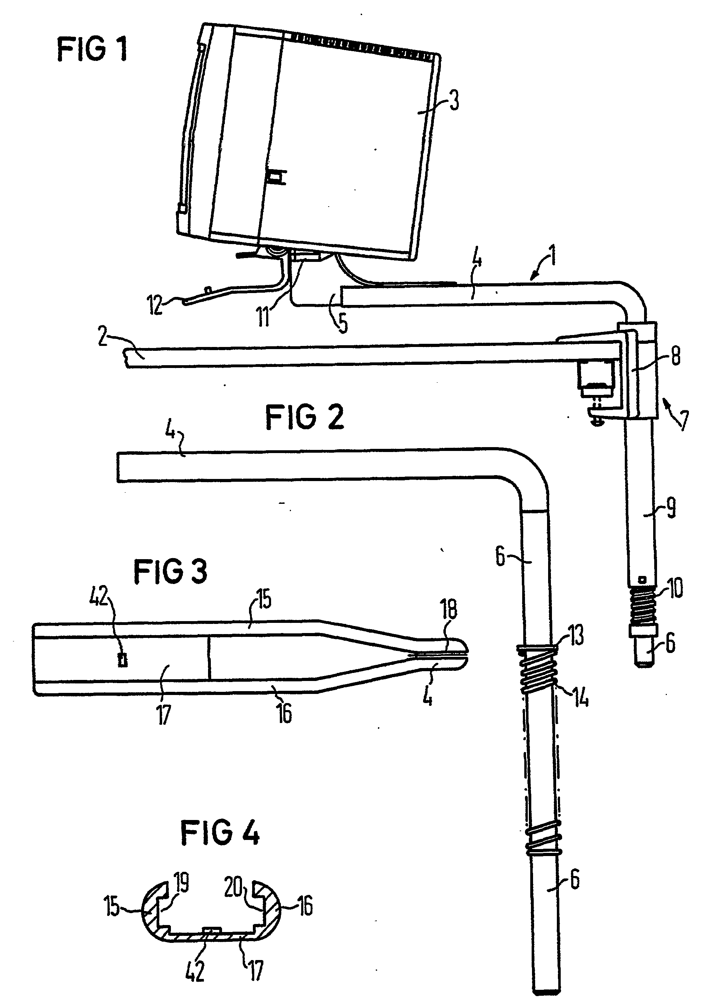

Die in FIG 1 dargestellte Trägeranordnung 1 ist an einer Tischplatte 2 befestigt und trägt ein Sichtgerät 3, beispielsweise ein Datensichtgerät. Die Trägeranordnung 1 enthält einen horizontalen Tragarm 4, in dessen Längsrichtung ein das Sichtgerät 3 aufnehmender Gleitkörper 5 verschiebbar angeordnet ist. Der Tragarm 4 ist nach einer Krümmung um 90° mit einem vertikalen Stützarm 6 verbunden, der in einer Halterung 7 drehbar und in vertikaler Richtung verschiebbar geführt wird. Die Halterung 7 enthält eine Schraubklemme 8, mittels der die Trägeranordnung 1 an der Tischplatte 2 befestigt ist. Anstelle der Schraubklemme 8 kann auch eine entsprechende Wandbefestigung vorgesehen sein, mittels der die Halterung an einer senkrechten Wand schraubbar befestigt werden kann. Die Halterung 7 enthält weiterhin einen Hohlkörper 9, der rohrförmig ausgebildet sein kann. Der Hohlkörper 9 dient einerseits zur Führung des Stützarms 6 und andererseits stützt er an seinem unteren Ende eine Feder ab, die das Gewicht des Sichtgeräts 3 und gegebenenfalls der Trägeranordnung 1 kompensiert und am Stützarm 6 angreift. Die Kraft der Feder kann durch einen Schraubeinsatz 10 eingestellt werden, der in den Hohlkörper 9 hineingeschraubt werden kann.

An dem Gleitkörper 5 ist ein Trägerteil 11 beispielsweise um ± 90° drehbar angeordnet und auf dem Trägerteil 11 ist das Sichtgerät 3 neigbar befestigt. An dem Trägerteil 11 ist weiterhin ein Handgriff 12 befestigt, mit dem das Sichtgerät 3 in eine optimale Arbeitsstellung gebracht werden kann. Ein Betrachter kann unter Verwendung des Handgriffs 12 das Sichtgerät 3 durch die Führung des Stützarms 6 im Hohlkörper 9 in vertikaler Richtung verschieben, durch Drehung des Tragarms 4 um die Achse des Stützarms 6 schwenken, durch Verschiebung des Gleitkörpers 5 in dem Tragarm 4 in Längsrichtung des Tragarms 4 verschieben, durch Drehung des Trägerteils 11 in dem Gleitkörper 5 drehen und durch die drehbare Befestigung des Sichtgeräts 3 auf dem Trägerteil 11 neigen. Der Handgriff 12 kann auch derart ausgebildet sein, daß er gleichzeitig als Halterung für eine Tastatur des Sichtgerätes 3 dient, wenn dieses nicht ständig benötigt wird. In diesem Fall wird die Tastatur zwischen den Handgriff 12 und die Unterseite des Sichtgerätes 3 eingeschoben und verklemmt.

Die in FIG 2 dargestellte Seitenansicht zeigt, daß an dem vertikalen Stützarm 6 in horizontaler Richtung der Tragarm 4 angebracht ist, der an seinem dem Stützarm 6 zugewandten Ende eine Krümmung um 90° aufweist. An dem Stützarm 6 ist eine Scheibe 13 angebracht, die den oberen Anschlag für eine als Druckfeder ausgebildete Feder 14 bildet, die sich am Schraubeinsatz 10 am unteren Ende des Hohlkörpers 9 abstützt. Der Stützarm 6 ist vorzugsweise stufenweise sich nach unten verjüngend ausgebildet, wobei sich eine Stufe unmittelbar oberhalb der Scheibe 13 befindet.

Bei der in FIG 3 dargestellten Draufsicht auf den Tragarm 4 ist zu erkennen, daß dieser zwei teilweise parallele Teilarme 15 und 16 aufweist. Die beiden Teilarme 15 und 16 können an der Unterseite durch eine Platte 17 miteinander verbunden sein, um die Stabilität des Tragarms 4 zu erhöhen. Die beiden Teilarme 15 und 16 sind in der Nähe der Krümmung und damit in der Nähe der Verbindungsstelle zum Stützarm 6 zusammengeführt. Sie können dadurch erzeugt werden, daß ein mit Kerben 18 versehenes Rohr, beispielsweise aus Aluminium nach der Krümmung um 90° entlang der Kerben aufgetrennt und auseinandergebogen wird. Anschließend kann die Platte 17 zwischen den beiden Teilarmen 15 und 16 eingeschweißt werden.

Bei dem in FIG 4 gezeigten Schnittbild des Tragarms 4 an einer Stelle, an der die Platte 17 vorgesehen ist, zeigt, daß an den einander zugewandten Innenseiten der beiden Teilarme 15 und 16 Führungsnuten 19 bzw. 20 vorgesehen sind, in denen entsprechende Führungen des Gleitkörpers 5 in Längsrichtung des Tragarms 4 geführt werden. Durch die Führungsnuten 19 und 20 ist sichergestellt, daß der Gleitkörper 5 nicht aus dem Zwischenraum zwischen den beiden Teilarmen 15 und 16 herausspringen kann. Eine Erhebung 42 auf der Platte 17 dient als vorderer und unterer Anschlag bei einer Verschiebung des Gleitkörpers 5.

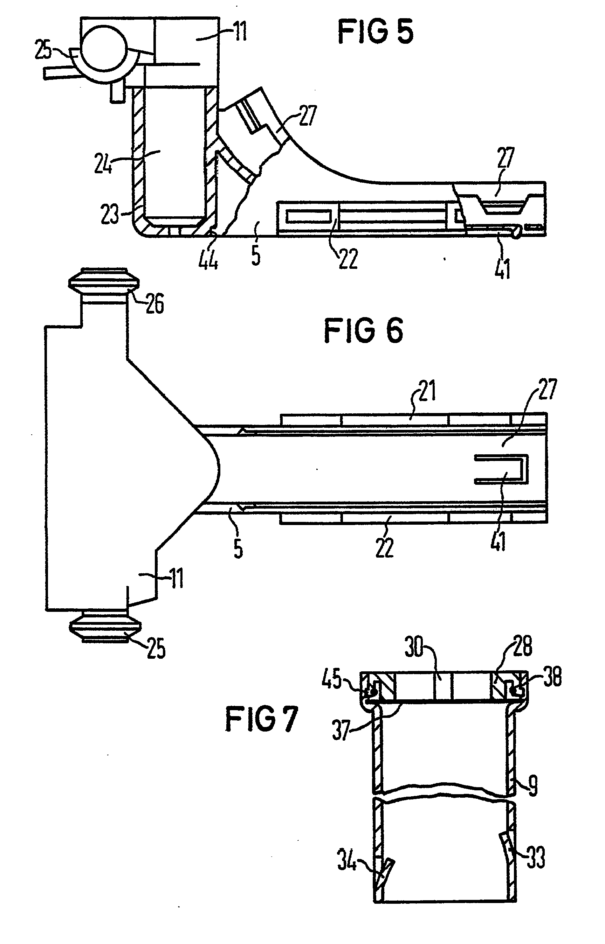

Die in FIG 5 dargestellte Seitenansicht zeigt den Gleitkörper 5, der teilweise geschnitten dargestellt ist und die FIG 6 zeigt die Draufsicht auf den Gleitkörper 5. Zu beiden Seiten des Gleitkörpers 5 sind die Führungen 21 und 22 dargestellt, die in die Führungsnuten 19 bzw. 20 eingreifen. Der Führungskörper 5 ist mit einer vertikalen Bohrung 23 versehen, in die ein Zylinder 24 des in dem Gleitkörper 5 unter Reibung drehbar gelagerten Trägerteils 11 eingesetzt ist. Das Trägerteil 11 weist Rundungen 25 und 26 auf, mittels denen das Sichtgerät 3 neigbar an dem Trägerteil 11 befestigt ist.

Dem Sichtgerät 3 werden Kabel über einen Kabelkanal im Gleitkörper 5 zugeführt. Dieser Kabelkanal ist mit einer Kabelabdeckung 27 versehen, die lös-

bar an dem Gleitkörper 5 befestigt ist. Diese lösbare Befestigung stellt eine Sicherheitsmaßnahme dar, da, falls das Kabel sehr stark gespannt wird, die Kabelabdeckung 27 herausspringt.

An der Unterseite des Gleitkörpers 5 ist am rückwärtigen Teil eine federnde hakenförmige Zunge 41 vorgesehen, die nach einer Bewegung des Sichtgeräts 3 zum Betrachter an der Erhebung 42 der Platte 17 angreift und einen vorderen Anschlag bildet. Außerdem weist der Gleitkörper 5 an seinem vorderen Teil eine Kante 44 auf, die nach einer Verschiebung des Gleitkörpers 5 vom Betrachter weg an der Erhebung 42 der Platte 17 anstößt und auf diese Weise einen rückwärtigen Anschlag bildet.

Der in FIG 7 gezeigte Hohlkörper 9 weist an seinem oberen Ende, an dem beispielsweise die Schraubklemme 8 angebracht ist, eine Verdickung auf, in der ein mit einer Bohrung für den Stützarm 6 versehenes Kunststoffteil 28 eingesetzt ist. Das Kunststoffteil 28 dient dazu, bei einer Drehung des Tragarms 4 und damit bei einer Drehung des Stützarms 6 eine genügende Reibung sicherzustellen, jedoch bei einer Verschiebung des Stützarms 6 in Vertikalrichtung eine geringere Reibung zu verursachen.

Das Kunststoffteil 28 stützt sich auf einer ringförmigen Scheibe 37 ab und enthält in einem Hohlraum einen Stahlring 38, der eine Erhebung am äußeren Rand des Kunststoffteils 28 in eine ringförmige Nut 45 des Hohlkörpers 9 drückt, um eine erhöhte Drehreibung zu erreichen.

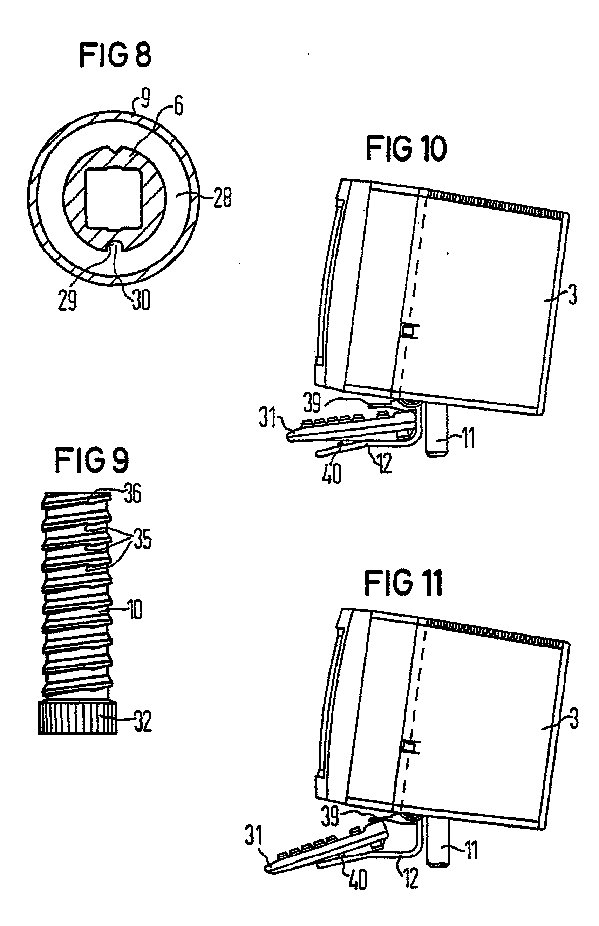

Wie in FIG 8 dargestellt ist, kann zum Zweck der Erhöhung der Reibung bei der Drehung des Stützarms 6 dieser mit einer Nut 29 versehen sein, in die eine Nase 30 des Kunststoffteils 28 eingreift. Bei der Drehung des Stützarms 6 wird dieser dann nicht innerhalb der Bohrung des Kunststoffteils 28 gedreht, sondern dieses dreht sich gemeinsam mit dem Kunststoffteil 28 innerhalb des Hohlkörpers 9, so daß eine größere Reibung auftritt. Zusätzlich kann an der Außenseite des Kunststoffteils 28 noch ein Reibungsbelag vorgesehen werden, um die Reibung zwischen dem Kunststoffteil 28 und dem Hohlkörper 9 noch weiter zu erhöhen. Bei einer Verschiebung des Stützarms 6 in Vertikalrichtung wird jedoch das Kunststoffteil 28 nicht bewegt, sondern der Stützarm 6 wird nur in der Bohrung des Kunststoffteils 28 verschoben. Damit tritt bei der Vertikalverschiebung des Stützarms 6 eine geringere Reibung als bei seiner Drehung auf.

Die Druckfeder 14 stützt sich am unteren Ende des Hohlkörpers 9 an einem Schraubeinsatz 10 (Figur 9) ab, der mit einem geriffelten Rand 32 versehen ist und der von Hand in den Hohlkörper 9 eingeschraubt wird. Der Hohlkörper 9 weist an seiner Unterseite Rastnasen 33, 34 auf, die in das Gewinde des Schraubeinsatzes 10 eingreifen. Der Schraubeinsatz 10 weist Raststellen 35 auf, an denen bei einer Drehung des Schraubeinsatzes 10 die Rastnasen 33, 34 anliegen und auf diese Weise wird eine Sperre gebildet, die verhindert, daß der Schraubeinsatz 10 bei einer Drehung des Tragarms 4 und damit des Stützarms 6 herausgedreht wird. Bei einer Drehung des Schraubeinsatzes 10 von Hand muß der durch die Raststellen 35 gebildete Widerstand überwunden werden. Die oberste Rastnase 36 weist einen besonders hohen Widerstand auf und der Schraubeinsatz 10 kann nur vollständig aus dem Hohlkörper 9 herausgedreht werden, wenn er in Richtung zum Hohlkörper 9 gedrückt wird.

Die Rastnasen 33 und 34 bilden auch eine Sperre für die Feder 14, so daß bei einem vollkommen herausgeschaubten Schraubeinsatz 10 die Feder 14 nicht aus dem Hohlkörper 9 herausfällt. Wenn der Schraubeinsatz 10 eingeschraubt wird, stützt sich die Feder 14 an diesem ab. Der Schraubeinsatz 10 kann eine Bohrung aufweisen, durch die der Stützarm 6 hindurchragen kann.

Die FIG 10 zeigt die Tastatur 13 in einer Ruhestellung, in der sie zwischen der Nase 39 unterhalb des Sichtgerätes 3 und dem Handgriff 12 eingeklemmt ist. Das vordere Ende des Handgriffs ist in diesem Fall nach wie vor zugänglich, so daß das Sichtgerät 3 in eine geeignete Stellung gebracht werden kann. Das Festklemmen der Tastatur 31 erfolgt insbesondere durch ein Kippmoment infolge des Gewichts der Tastatur 31.

Bei der Darstellung in FIG 11 befindet sich die Tastatur 31 in einer Bereitschaftsstellung, in der die Bedienelemente der Tastatur 31, insbesondere für Kurzeingaben bedient werden können. Die Tastatur 31 ist zwischen der Nase 39 und Noppen 40 eingeklemmt. An der Unterseite der Tastatur 31 können Ausnehmungen vorgesehen sein, in die die Noppen 40 eingreifen, um eine seitliche Verschiebung der Tastatur 31 auf dem Handgriff 12 zu verhindern, so daß durch Erfassen der Tastatur 31 anstelle des Handgriffs 12 das Sichtgerät 3 in eine geeignete Stellung gebracht werden kann.

## Patentansprüche

1. Trägeranordnung für ein Sichtgerät (3), bei der in einer ortsfesten Halterung (7) ein vertikaler Stützarm (6) gelagert ist, bei der an dem vertikalen Stützarm (6) ein horizontaler Tragarm (4) befestigt ist und bei dem ein das Sichtgerät (3) aufnehmender Gleitkörper (5) an dem Tragarm (4) in Längsrichtung verschiebbar gelagert ist, dadurch gekennzeichnet, daß der Tragarm (4) aus zwei Teilarmen (15, 16) gebildet ist, die in der Nähe der Verbindungsstelle mit dem vertikalen Stützarm (6) zusammengeführt sind, zwischen denen der Gleitkörper (5) in Längsrichtung angeordnet und in Längsrichtung des Tragarms (4) verschiebbar geführt ist und daß der vertikale Stützarm (6) in der Halterung (7) drehbar und stufenlos verschiebbar angeordnet ist und sich an der Halterung (7) durch eine Feder (14) abstützt.

2. Trägeranordnung nach Anspruch 1, dadurch gekennzeichnet, daß die Teilarme (15, 16) an ihrer Unterseite teilweise miteinander verbunden sind.

3. Trägeranordnung nach Anspruch 2, dadurch gekennzeichnet, daß die Teilarme (15, 16) an ihrer Unterseite durch eine Platte (17) teilweise miteinander verbunden sind, daß der Gleitkörper (5) an seiner Unterseite einen federnden Haken (41) aufweist, der nach einer Verschiebung des Sichtgerätes (3) zu einem Betrachter an der Erhebung (42) angreift, um einen vorderen Anschlag zu bilden.

4. Trägeranordnung nach Anspruch 2 oder Anspruch 3, dadurch gekennzeichnet, daß die Platte (17) eine Erhebung (42) aufweist, an der eine Kante (44) des Gleitkörpers (5) nach einer Verschiebung des Sichtgerätes (3) vom Betrachter weg angreift, um einen rückwärtigen Anschlag zu bilden.

5. Trägeranordnung nach einem der Ansprüche 1 bis 4, dadurch gekennzeichnet, daß die Teilarme (15, 16) an den einander zugewandten Innenseiten Führungsnuten (19, 20) aufweisen und daß der Gleitkörper (5) an seinen Längsseiten Führungen (21, 22) aufweist, die in den Führungsnuten (19, 20) gleiten.

6. Trägeranordnung nach einem der Ansprüche 1 bis 5, dadurch gekennzeichnet, daß an dem Gleitkörper (5) ein Trägerteil (11) drehbar angeordnet ist, auf dem das Sichtgerät (3) neigbar befestigt ist.

7. Trägeranordnung nach einem der Ansprüche 1 bis 6, dadurch gekennzeichnet, daß an der Unterseite des Sichtgerätes (3) ein Handgriff (12) vorgesehen ist, mittels dem der Gleitkörper (5) längs verschiebbar ist.

8. Trägeranordnung nach Anspruch 7, dadurch gekennzeichnet, daß der Handgriff (12) gleichzeitig als Halterung für eine dem Sichtgerät (3) zugeordnete Tastatur (31) ausgebildet ist.

9. Trägeranordnung nach Anspruch 8, dadurch gekennzeichnet, daß über dem Handgriff (12) unterhalb des Sichtgerätes (3) eine Nase (39) und auf der Oberseite des Handgriffs (12) Noppen (40) derart angeordnet sind, daß die Tastatur (31) zwischen der Nase (39) und den Noppen (40) einklemmbar ist.

## Claims

1. Supporting arrangement for a visual display unit (3), in which a vertical bearing arm (6) is mounted in a stationary bracket (7), in which a horizontal support arm (4) is attached to the vertical bearing arm (6), and in which a sliding body (5) accommodating the visual display unit (3) is mounted on the support arm (4) so as to be displaceable in the longitudinal direction, characterized in that the support arm (4) is formed from two partial arms (15, 16) which are joined near to the connection point with the vertical bearing arm (6), between which partial arms the sliding body (5) is arranged in the longitudinal direction and is guided so as to be displaceable in the longitudinal direction of the support arm (4), and in that the vertical bearing arm (6) is arranged in the bracket (7) rotatably and infinitely variably and is supported on the bracket (7) by a spring (14).

2. Supporting arrangement according to Claim 1, characterized in that the partial arms (15, 16) are partially connected to each other on their underside.

3. Supporting arrangement according to Claim 2, characterized in that the partial arms (15, 16) are partially connected to each other on their underside by a plate (17), in that the sliding body (5) has on its underside a sprung hook (41) which engages on the elevation (42) in order to form a frontal stop after displacement of the visual display unit (3) towards a viewer.

4. Supporting arrangement according to Claim 2 or Claim 3, characterized in that the plate (17) has an elevation (42), on which one edge (44) of the sliding body (5) engages in order to form a rear stop after displacement of the visual display unit (3) away from the viewer.

5. Supporting arrangement according to one of Claims 1 to 4, characterized in that, on the mutually facing insides, the partial arms (15, 16) have guide grooves (19, 20), and in that, on its longitudinal sides, the sliding body (5) has guides (21, 22) which slide in the guide grooves (19, 20).

6. Supporting arrangement according to one of Claims 1 to 5, characterized in that a carrier part (11), to which the visual display unit (3) is attached so as to be tiltable, is arranged rotatably on the sliding body (5).

7. Supporting arrangement according to one of Claims 1 to 6, characterized in that a handle (12), by means of which the sliding body (5) is longitudinally displaceable, is provided on the underside of the visual display unit (3).

8. Supporting arrangement according to Claim 7, characterized in that the handle (12) is constructed simultaneously as a bracket for a keyboard (31) assigned to the visual display unit (3).

9. Supporting arrangement according to Claim 8, characterized in that a protrusion (39) is arranged above the handle (12) below the visual display unit (3), and knobs (40) are arranged on the top side of the handle (12) in such a way that the keyboard (31) can be clamped between the protrusion (39) and the knobs (40).

## Revendications

1. Dispositif de support pour un appareil de visualisation (3), dans lequel un bras d'appui vertical (6) est monté dans une monture fixe (7), dans laquelle un bras de support horizontal (4) est fixé au bras d'appui vertical (6) et dans lequel un corps coulissant (5) qui reçoit l'appareil de visualisation (3), est monté sur le bras de support (4) de manière à pouvoir coulisser dans la direction longitudinale, caractérisé par le fait que le bras de support (4) est formé par deux bras partiels (15, 16) qui sont assemblés dans le voisinage de l'emplacement de liaison avec le bras d'appui vertical (6) et entre lesquels est disposé dans le sens longitudinal le corps coulissant (5) qui est déplaçable dans le sens longitudinal du bras de support (4), et que le bras d'appui vertical (6) est disposé dans la monture (7) de façon à pouvoir y tourner et à y être déplaçable de façon continue, et prend appui dans la monture (7) par l'intermédiaire d'un ressort (14).

2. Dispositif de support selon la revendication 1, caractérisé par le fait que les bras partiels (15, 16) sont en partie reliés entre eux, sur leurs côtés inférieurs.

3. Dispositif de support selon la revendication 2, caractérisé par le fait que les bras partiels (15, 16) sont reliés en partie entre eux, sur leurs côtés inférieurs, à l'aide d'une plaque (17), que le corps coulissant (5) comporte sur sa face inférieure un crochet élastique (41) qui, après un déplacement de l'appareil de visualisation (3) vers un utilisateur, attaque une surélévation (42) pour former une butée antérieure.

4. Dispositif de support selon la revendication 2 ou la revendication 3, caractérisé par le fait que la plaque (17) comporte une surélévation (42) qui est attaquée par un bord (44) du corps coulissant (5) après un déplacement de l'appareil de visualisation (3) dans le sens de l'éloignement par rapport à un observateur, afin de former une butée arrière.

5. Dispositif de support selon l'une des revendications 1 à 4, caractérisé par le fait que les bras partiels (15, 16) comportent sur les côtés intérieurs qui se font face, des gorges de guidage (19, 20) et que le corps coulissant (5) comporte sur ses côtés longitudinaux (21, 22), des guidages (21, 22) qui glissent dans les gorges de guidage (19, 20).

6. Dispositif de support selon l'une des revendications 1 à 5, caractérisé par le fait que sur le corps coulissant (5) est tourillonné un élément de support (11) sur lequel est fixé l'appareil de visualisation (3) de manière à pouvoir être incliné.

7. Dispositif de support selon l'une des revendications 1 à 6, caractérisé par le fait que sur le côté inférieur de l'appareil de visualisation (3) est prévue une poignée (12) à l'aide de laquelle le corps coulissant (5) est déplaçable longitudinalement.

8. Dispositif de support selon la revendication 7, caractérisé par le fait que la poignée (12) est en même temps réalisée pour constituer le support pour un clavier (31) associé à l'appareil de visualisation (3).

9. Dispositif de support selon la revendication 8, caractérisé par le fait qu'au-dessus de la poignée (12) et en-dessous de la poignée (12) sont disposés des patins (40) de façon que le clavier (31) puisse être bloqué entre le bec (39) et les patins (40).

**FIG 1**

**FIG 2**

**FIG 3**

**FIG 4**

# FIG 5

# FIG 6

# FIG 7

FIG 8

FIG 9

FIG 10

FIG 11